# EUROPÄISCHE PATENTSCHRIFT

(11) **EP 2 861 454 B1**
(45) Veröffentlichungstag und Bekanntmachung des Hinweises auf die Patenterteilung: **08.08.2018**
(21) Anmeldenummer: 13728185.3
(22) Anmeldetag: 11.06.2013
(51) Int. Cl.: B60N 2/015, B60N 2/36

(54) **VERRIEGELUNGSVORRICHTUNG UND FAHRZEUGSITZ**
LOCKING DEVICE AND A VEHICLE SEAT
DISPOSITIF DE VERROUILLAGE ET UN SIÈGE DE VÉHICULE

(30) Priorität: 18.06.2012 DE 102012011951
(43) Veröffentlichungstag der Anmeldung: 22.04.2015
(73) Patentinhaber: Adient Luxembourg Holding S.à r.l., 1855 Luxembourg (LU)
(72) Erfinder: GORDEENKO, Igor, 50226 Frechen (DE)
(74) Vertreter: Loock, Jan Pieter
(86) Internationale Anmeldenummer: PCT/EP2013/062019
(87) Internationale Veröffentlichungsnummer: WO 2013/189781

(56) Entgegenhaltungen:
- EP-A1- 2 181 885
- DE-C1- 3 828 223
- US-A1- 2005 236 862

## Beschreibung

### Stand der Technik

Die vorliegende Erfindung geht aus von einer Verriegelungsvorrichtung, insbesondere für einen Fahrzeugsitz, aufweisend einen Haltebereich zur Aufnahme eines Gegenelements, eine Klinke, welche zwischen einer Verriegelungsstellung zur Verriegelung des Gegenelements im Haltebereich und einer Entriegelungsstellung verschwenkbar ist.

Solche Verriegelungsvorrichtungen sind allgemein bekannt. Beispielsweise ist aus der Druckschrift DE 10 2004 001 766 B3 eine Verriegelungsvorrichtung für einen Fahrzeugsitz bekannt, welche ein eine Grundplatte aufweisendes Gehäuse, eine im Gehäuse angeordneten, schwenkbar gelagerten Klinke zum Verriegeln mit einem Gegenelement und wenigstens einem ebenfalls im Gehäuse angeordneten, schwenkbar gelagerten Sicherungselement, welches durch Zusammenwirken mit der Klinke einen verriegelten Zustand sichert, umfasst.

Nachteilig an solchen Verriegelungsvorrichtungen ist, dass die Klinke von dem Gegenelements geringfügig beabstandet sein muss, damit etwaige Fertigungstoleranzen ein Verriegeln des Gegenelements mittels der Klinke nicht beeinträchtigen können. Der geringe Abstand zwischen dem Gegenelement und der Klinke führt jedoch dazu, dass bei Vibrationen der Verriegelungsvorrichtung, welche beispielsweise durch die Fahrt des Fahrzeugs über eine holprige Straße hervorgerufen werden, eine verstärkte Geräuschentwicklung durch zeitweises Anschlagen des Gegenelements an die Klinke erzeugt wird. Eine gattungsgemässe Verriegelungsvorrichtung ist aus der DE3828223C bekannt.

### Offenbarung der Erfindung

Der Erfindung liegt die Aufgabe zu Grunde, eine Verriegelungsvorrichtung der eingangs genannten Art zur Verfügung zu stellen, bei welcher die Erzeugung von Störgeräuschen unterdrückt wird und welche gleichzeitig einfach und aus vergleichsweise wenig Teilen aufgebaut ist und eine kostengünstige und schnelle Herstellung ermöglicht. Gleichzeitig soll eine sichere und zuverlässige Verriegelung des Gegenelements auch in Unfallsituationen gewährleistet sein.

Gelöst wird diese Aufgabe mit einer Verriegelungsvorrichtung, insbesondere für einen Fahrzeugsitz, gemäss dem Anspruch 1. In vorteilhafter Weise weist das Kompensationselement eine Funktionsfläche auf, welche in der Kontaktstellung in einem formschlüssigen Kontakt zum Gegenelement steht, so dass die Erzeugung von Störgeräuschen zwischen der Klinke und dem Gegenelements, beispielsweise aufgrund von Vibrationen, unterdrückt wird. Gleichzeitig wird das Gegenelement im Falle eines Unfalls durch die Klinke gesichert, wenn die auf das Gegenelement wirkende Kraft durch das Kompensationselement nicht mehr gehalten werden kann. Ein ungewolltes Auslösen der Verriegelungsvorrichtung im Falle eines Unfalls wird somit unterbunden. Die Toleranzgrenzen für die Verriegelungsvorrichtung können aufgrund der Implementierung des Kompensationselements erhöht werden. Die Herstellungskosten werden somit im Vergleich zum Stand der Technik erheblich gesenkt. Denkbar ist, dass die Verriegelungsvorrichtung zur lösbaren Fixierung eines herausnehmbaren Fahrzeugsitzes an einem fahrzeugfesten Boden im Fahrgastraum eines Kraftfahrzeugs vorgesehen ist. Alternativ ist natürlich auch denkbar, beliebige andere Fahrzeug- und/oder Fahrzeugzubehörkomponenten mittels der erfindungsgemäßen Verriegelungsvorrichtung reversibel lösbar an karosseriefesten Strukturen zu befestigen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass das Kompensationselement eine in der Kontaktstellung dem Gegenelement zugewandte Funktionsfläche aufweist, welche in der Kontaktstellung eine in den Haltebereich hinein gerichtete Kraft auf das Gegenelement ausübt. In vorteilhafter Weise wird somit eine Relativbewegung des Gegenelements relativ zum Haltebereich unterdrückt und somit das Auftreten von Störgeräuschen verhindert. In der Kontaktstellung ist daher vorzugsweise die Funktionsfläche des Kompensationselements in mechanischem Kontakt mit dem Gegenelement, während in der Verriegelungsstellung die weitere Funktionsfläche der Klinke von dem Gegenelement beabstandet ist.

Gemäß einer bevorzugten Ausführungsform der vorliegenden Erfindung ist vorgesehen, dass die Funktionsfläche länger als eine in der Verriegelungsstellung dem Gegenelement zugewandte weitere Funktionsfläche der Klinke ausgebildet ist, so dass der Toleranzbereich, in welchem sich das Gegenelement befinden kann, um vom Kompensationselement fixiert zu werden vorteilhafterweise erhöht wird. Die Funktionsfläche ist vorzugsweise konkav ausgebildet, wodurch eine Anordnung des Gegenelements im Bereich der Funktionsfläche sichergestellt wird.

Gemäß einer bevorzugten Ausführungsform der vorliegenden Erfindung ist vorgesehen, dass die Verriegelungsvorrichtung derart ausgebildet ist, dass das Gegenelement nur beim Vorliegen einer insbesondere unfallbedingten Bewegung des Gegenelements entlang einer aus dem Haltebereich herausführenden Löserichtung in Kontakt mit der weiteren Funktionsfläche gelangt, wobei die weitere Funktionsfläche insbesondere senkrecht zur Löserichtung ausgebildet ist. In vorteilhafter Weise werden unfallbedingte Kräfte durch die Klinke aufgenommen. Das Kompensationselement kann daher schwächer dimensioniert werden, wodurch Herstellungskosten einsparbar sind. Die weitere Funktionsfläche ist insbesondere rechtwinklig zur Löserichtung ausgerichtet, so dass im Falle eines Unfalls keine in die Entriegelungsstellung gerichtete Kraftkomponente auf die Klinke wirkt. Erfindungsgemäss ist vorgesehen, dass die Klinke mittels eines ersten Federelements in Richtung der Verriegelungsvorrichtung federelastisch vorgespannt ist und wobei das Kompensationselement mittels eines zweiten Federelements entlang der weiteren zweiten Richtung über die Kontaktstellung hinaus federelastisch gespannt ist. In vorteilhafter Weise dient das zweite Federelement dazu, in der Kontaktstellung stets einen mechanischen Kontakt zwischen dem Kompensationselement und dem Gegenelement sicherzustellen. Die Verriegelungsvorrichtung wird somit insbesondere automatisch in die Verriegelungs- und Kontaktstellung überführt, wenn keine Auslösekraft auf die Klinke ausgeübt wird. Die Verwendung von zwei separaten Federn ermöglicht jeweils eine optimale Schließkraft auszuüben, da die Klinke und das Kompensationselement zwei unterschiedliche Arbeitswinkel umfassen. Erfindungsgemäss ist vorgesehen, dass ein Kopplungsmechanismus zwischen der Klinke und dem Kompensationselement derart ausgebildet ist, dass eine Bewegung der Klinke von der Verriegelungsstellung in die Entriegelungsstellung eine Überführung des Kompensationselements von der Kontaktstellung in die Freigabestellung bewirkt. Vorteilhafterweise wird das Kompensationselement beim Überführen der Klinke von der Verriegelungsstellung in die Entriegelungsstellung in die Freigabestellung überführt, so dass beim Lösen des Gegenelements neben der Betätigung der Klinke keine separate Betätigung des Kompensationselements notwendig ist. Beim Überführen der Klinke von der Entriegelungsstellung in die Verriegelungsstellung schwenkt das Kompensationselement aufgrund der Federkraft des zweiten Federelements wieder in die Kontaktstellung. In vorteilhafter Weise braucht das Kompensationselement somit in keinem der Fälle einzeln betätigt zu werden. Es muss lediglich die Klinke in der aus dem Stand der Technik bekannten üblichen Weise bedient werden. Der Kopplungsmechanismus umfasst vorzugsweise einen am Kompensationselement ausgebildeten Mitnehmer, welcher mit einer an der Klinke ausgebildeten Steuerkurve zusammenwirkt. Erfindungsgemäss ist vorgesehen, dass eine erste Schwenkbewegung der Klinke von der Verriegelungsstellung in Richtung der Entriegelungsstellung im Wesentlichen parallel zu einer weiteren ersten Schwenkbewegung des Kompensationselements von der Kontaktstellung in Richtung der Freigabestellung ausgerichtet ist und wobei eine zweite Schwenkbewegung der Klinke von der Entriegelungsstellung in Richtung der Verriegelungsstellung im Wesentlichen parallel zu einer weiteren zweiten Schwenkbewegung des Kompensationselements von der Freigabestellung in Richtung der Kontaktstellung ausgerichtet ist. Die Schwenkbewegungen des Kompensationselements und der Klinke sind im Wesentlichen parallel, so dass in einfacher Weise der Kopplungsmechanismus realisiert werden kann, ohne dass weitere bewegliche Teile benötigt würden. Ferner wird nur auf einer Seite des Haltebereichs Bauraum für die Klinke und das Kompensationselement benötigt, so dass ein kompakterer Aufbau erzielt wird. Die Klinke umfasst dabei vorzugsweise eine einseitig, offene erste Klaue zum teilweisen Umgreifen des Gegenelements in der Verriegelungsstellung umfasst und wobei das Kompensationselement eine einseitig offene zweite Klaue zum teilweisen Umgreifen des Gegenelements in der aktiven Kontaktstellung umfasst. Die erste und die zweite Klaue weisen insbesondere eine ähnliche Öffnungsrichtung auf, so dass sie das Gegenelement im Wesentlichen von der gleichen Seite aus umgreifen.

Gemäß einer bevorzugten Ausführungsform der vorliegenden Erfindung ist vorgesehen, dass der Kopplungsmechanismus als mechanisches Übersetzungsmittel derart ausgebildet ist, dass die erste Schwenkbewegung der Klinke eine schnellere weitere erste Schwenkbewegung des Kompensationselements bewirkt. Dies wird dadurch erzielt, dass die erste Drehachse des Kompensationselements gegenüber einer zweiten Drehachse der Klinke vorzugsweise versetzt angeordnet ist und beim Betätigen der Klinke der Mitnehmer über die Steuerkurve gleitet. Die erste und die zweite Drehachse sind dabei parallel zueinander ausgerichtet. Es ist somit möglich, dass der Arbeitswinkel der Klinke kleiner im Vergleich zum Arbeitswinkel des Kompensationselements ist. Dies hat zum Vorteil, dass Funktionsfläche vergleichsweise lang ausgebildet werden kann und somit ein zuverlässiges Unterbinden von Störgeräuschen gewährleistet werden kann, ohne dass im Gegenzug ein zuverlässiges Lösen des Gegenelements beim Betätigen der Klinke behindert wird.

Ein weiterer Gegenstand der vorliegenden Erfindung ist ein Fahrzeugsitz aufweisend eine erfindungsgemäße Verriegelungsvorrichtung, wobei die Verriegelungsvorrichtung insbesondere zur Befestigung des Fahrzeugsitzes an einem Fahrzeugboden dient.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht einer Verriegelungsvorrichtung gemäß einer beispielhaften Ausführungsform der vorliegenden Erfindung, wobei die Klinke in der Verriegelungsstellung und das Kompensationselement in der Kontaktstellung angeordnet ist.
- **Figur 2**: zeigt eine weitere schematische Ansicht der Verriegelungsvorrichtung gemäß der beispielhaften Ausführungsform der vorliegenden Erfindung, wobei auf das Gegenelement eine beispielsweise unfallbedingte erhöhte Kraft in Öffnungsrichtung ausgeübt wird.
- **Figur 3**: zeigt eine weitere schematische Ansicht der Verriegelungsvorrichtung gemäß der beispielhaften Ausführungsform der vorliegenden Erfindung, wobei das Kompensationselement in der aktiven Kontaktstellung angeordnet ist und die Klinke von dem Kompensationselement in der Verriegelungsstellung fixiert wird.
- **Figur 4**: zeigt eine weitere schematische Ansicht der Verriegelungsvorrichtung gemäß der beispielhaften Ausführungsform der vorliegenden Erfindung, wobei die Klinke in der Verriegelungsstellung angeordnet ist und das Kompensationselement in die Freigabestellung bewegt ist.
- **Figur 5**: zeigt eine schematische Ansicht einer Verriegelungsvorrichtung gemäß einer beispielhaften Ausführungsform der vorliegenden Erfindung, wobei die Klinke in der Entriegelungsstellung und das Kompensationselement in der Freigabestellung angeordnet ist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

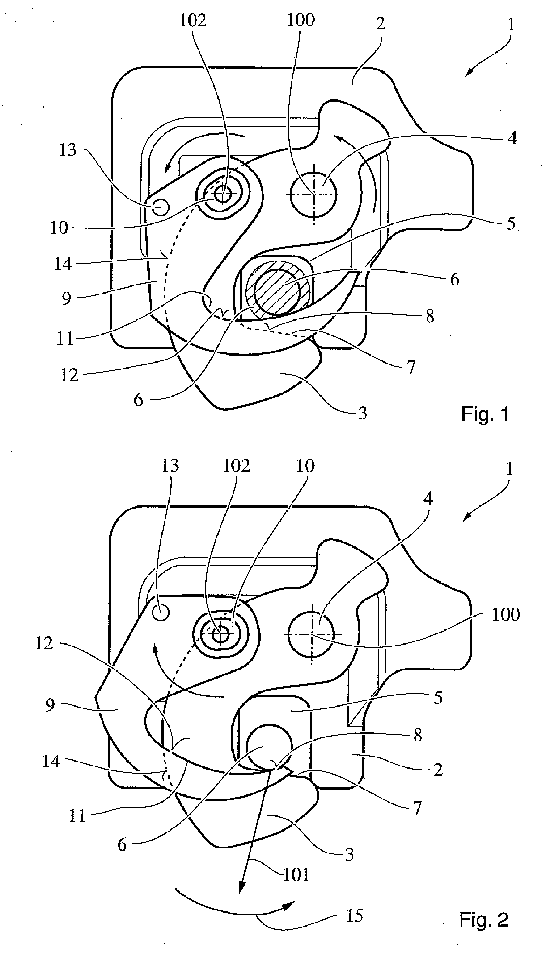

In **Figuren 1 bis 5** ist eine schematische Ansicht einer Verriegelungsvorrichtung 1 gemäß einer beispielhaften Ausführungsform der vorliegenden Erfindung in verschiedenen Betriebszuständen dargestellt.

Die Verriegelungsvorrichtung 1 umfasst eine Basisstruktur 2, in Form einer Grundplatte bzw. eines Gehäuses, an welcher eine Klinke 3 über einen ersten Lagerzapfen 4 schwenkbar befestigt ist. Die Basisstruktur 2 weist ferner einen maulförmigen Haltebereich 5 auf, welcher zur Aufnahme eines Gegenelements 6 dient. Das Gegenelement 6 umfasst beispielsweise einen Zapfen, welcher mittels der Verriegelungsvorrichtung 1 im Haltebereich 5 verriegelt werden soll. Denkbar ist, dass mittels der Verriegelungsvorrichtung 1 einen Fahrzeugsitz oder eine andere Komponente eines Fahrzeugs am Fahrzeug oder im Fahrzeuginnenraum karosseriefest reversibel lösbar fixiert werden soll.

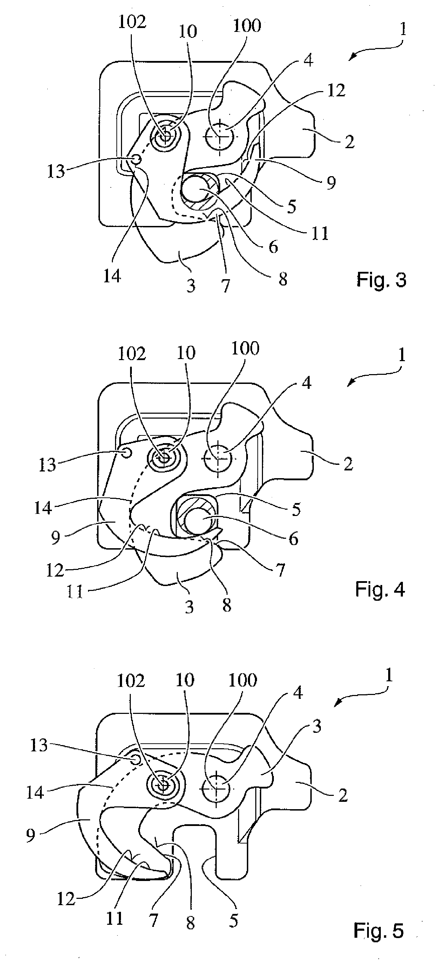

Die Klinke 3 ist hierfür um eine erste Drehachse 100 verschwenkbar und kann zwischen einer Verriegelungsstellung, in welcher das Gegenelement 6 im Haltebereich 5 durch die Klinke 3 verriegelt ist (siehe **Figur 1**), und eine Verriegelungsstellung, in welcher die Öffnung des Haltebereichs 5 nicht durch die Klinke 3 verschlossen ist (siehe **Figur 5**), verschwenkt werden. Die Klinke 3 ist mittels einer ersten Feder (nicht dargestellt) entlang einer ersten Drehrichtung in Richtung der Verriegelungsstellung federelastisch vorgespannt. Ferner kann die Klinke 3 mittels einer Betätigungseinheit (nicht dargestellt) entlang einer der ersten Drehrichtung entgegengesetzten zweiten Drehrichtung von der Verriegelungsstellung in die Entriegelungsstellung verschwenkt werden. Die Betätigungseinheit umfasst beispielsweise einen an der Klinke 3 befestigten Seilzug, welcher mit einem von einem Benutzer manuell zu betätigenden Handhabungsmittel verbunden ist.

Die Klinke 3 umfasst eine einseitig, offene erste Klaue 7, welche in der Verriegelungsstellung das Gegenelement 6 teilweise umfasst. Die Klinke 3 ist insbesondere derart ausgebildet, dass bei einer Kraftbeaufschlagung des Gegenelements 6 in Öffnungsrichtung 101, d.h. aus dem Haltebereich 5 heraus, eine Innenfläche 8 der ersten Klaue 7 derart kraftbeaufschlagt wird, dass im Wesentlichen keine resultierendes Drehmoment auf die Klinke 3 wirkt (Vgl. **Figur 2**). Im Falle eines Unfalls wird somit das Gegenelement 6 durch die Klinke 3 im Haltebereich 5 zuverlässig gesichert. Die Innenfläche 8 ist hierfür im Wesentlichen rechtwinklig zur Öffnungsrichtung 101 ausgebildet. Ein ungewolltes Verschwenken der Klinke 3 in die Entriegelungsstellung wird somit unterbunden.

Die Verriegelungsvorrichtung 1 weist ferner ein Kompensationselement 9 auf, welches dazu vorgesehen ist, das Gegenelement 6 im Haltebereich 5 formschlüssig zu kontaktieren (Vgl. Figuren 1 und 3), damit in der Verriegelungsstellung bei einer Vibration der Verriegelungsvorrichtung 1 oder des Gegenelements 6 keine Störgeräusche durch ein wiederholtes Anschlagen des Gegenelements 6 an die Klinke 3 erzeugt werden. Eine dem Gegenelement 6 zugewandte weitere Funktionsfläche der Klinke 3 ist daher in der Verriegelungsstellung vom Gegenelement 6 beabstandet, sofern keine unfallbedingten Kräfte wirken. Das Kompensationselement 9 ist mittels eines zweiten Lagerzapfens 10 um eine zweite Drehachse 102 drehbar an der Basisstruktur 2 angebunden. Die zweite Drehachse 102 ist parallel zur ersten Drehachse 100 ausgerichtet und von der ersten Drehachse 100 entlang einer zur Öffnungsrichtung 101 senkrechten Richtung beabstandet. Das Kompensationselement 9 umfasst eine einseitig, offene zweite Klaue 11 mit einer inneren, d.h. dem Gegenelement 6 zugewandten Funktionsfläche 12. Die Funktionsfläche 12 weist eine konkav gebogene Form auf. Das Kompensationselement 9 ist um die zweite Drehachse 102 entlang einer zur ersten Drehrichtung im Wesentlichen gleichsinnigen weiteren ersten Drehrichtung von einer Freigabestellung (siehe **Figur 5**), in welcher die zweite Klaue 11 nicht in den Haltebereich 5 ragt, in eine Kontaktstellung (siehe **Figur 1**), in welcher die zweite Klaue 111 im Haltebereich 5 angeordnet ist und das Gegenelement 6 kontaktiert (siehe **Figur 3**), verschwenkbar. Umgekehrt kann das Kompensationselement 9 um die zweite Drehachse 102 entlang einer zur zweiten Drehrichtung im Wesentlichen gleichsinnigen weiteren zweiten Drehrichtung von der Kontaktstellung zurück in die Freigabestellung (vgl. **Figur 4**) verschwenkt werden. Das Kompensationselement 9 ist mittels einer zweiten Feder (nicht abgebildet) von der Freigabestellung in Richtung der Kontaktstellung und gegebenenfalls gegen ein im Haltebereich 5 angeordnetes Gegenelement 6 federelastisch vorgespannt.

Das Kompensationselement 9 ist über einen Kopplungsmechanismus mit der Klinke 3 gekoppelt, indem das Kompensationselement 9 einen Mitnehmer 13 in Form eines Pins aufweist, welcher auf einer äußeren Steuerkurve 14 der Klinke 3 gleiten kann. Wenn die Klinke 3 entlang der zweiten Drehrichtung von der Verriegelungsstellung in die Entriegelungsstellung, beispielsweise durch Betätigen der Betätigungseinheit, überführt wird, gelangt die Steuerkurve 14 in Kontakt mit dem Mitnehmer 13, wodurch auch das Kompensationselement 9 von der Kontaktstellung entlang der weiteren zweiten Drehrichtung in die Freigabestellung verschwenkt wird (Vgl. **Figur 5**). Wenn die Klinke 3 zurück in die Verriegelungsstellung schwenkt, weil die Betätigungseinheit beispielsweise nicht mehr betätigt wird, schwenkt aufgrund der zweiten Feder auch das Kompensationselement 9 automatisch in die Kontaktstellung zurück. In der Kontaktstellung kann der Mitnehmer 13 außer Kontakt mit der Steuerkurve 14 sein (Vgl. **Figur 1**).

Wenn sich das Kompensationselement 9 in der Kontaktstellung befindet und auf das Gegenelement 6, beispielsweise aufgrund eines Unfalls, eine erhöhte Kraft in Öffnungsrichtung 101 wirkt, schwenkt das Kompensationselement 9 zurück und das Gegenelement 6 gelangt in Kontakt mit der weiteren Funktionsfläche der Klinke 3 (Vgl. **Figur 2**). Aufgrund der rechtwinkligen Ausbildung der weiteren Funktionsfläche wird durch die Kraftwirkung des Gegenelements 6 auf die weitere Funktionsfläche kein Drehmoment 15 auf die Klinke 3 entlang der zweiten Drehrichtung ausgeübt (Vgl. **Figur 2**), so dass das Gegenelement 6 von der in der Verriegelungsstellung verbleibenden Klinke 3 fixiert wird (Vgl. **Figur 2**). Die auf das Gegenelement 6 wirkenden Kräfte werden folglich von der Klinke 3 aufgenommen und über den ersten Lagerzapfen 4 in die Basisstruktur 2 eingeleitet.

Der um den Querschnitt des Gegenelements 6 illustrierte schraffierte Bereich zeigt schematisch den zulässigen Toleranzbereich, in welchem das Gegenelement 6 angeordnet sein kann, damit die Funktionsfläche 12 des Kompensationselements 9 das Gegenelement 6 kontaktieren kann und das Auftreten von Störgeräuschen unterbindet und gleichzeitig ein störungsfreies Überführen des Kompensationselements 9 von der Kontaktstellung in die Freigabestellung möglich ist.

Der Arbeitswinkel des Kompensationselements 9 ist größer als der Arbeitswinkel der Klinke 3, d.h. das Kompensationselement 9 ist um einen größeren Winkelbereich um die zweite. Drehachse 102 drehbar als die Klinke 3 um die erste Drehachse 100 drehbar ist. Durch den Versatz zwischen der ersten und der zweiten Drehachse 100, 102 wirkt der Kopplungsmechanismus zwischen der Klinke 3 und dem Kompensationselement 9 wie ein Übersetzungsgetriebe. Wenn der Mitnehmer 13 auf der Steuerkurve 15 abgleitet, während die Klinke 3 von der Verriegelungsstellung in die Entriegelungsstellung überführt wird, wird das Kompensationselement 9 daher mit größerer Schwenkgeschwindigkeit von der Kontaktstellung in die Freigabestellung überführt. Der freie Schenkel der zweiten Klaue 11 kann hierdurch länger als der freie Schenkel der ersten Klaue 7 ausgeführt werden, ohne dass hierfür das Lösen des Gegenelements 6 aus dem Haltebereich 5 beeinträchtigt wird.

### Bezugszeichenliste

- 1: Verriegelungsvorrichtung
- 2: Basisstruktur
- 3: Klinke
- 4: Erster Lagerzapfen
- 5: Haltebereich
- 6: Gegenelement
- 7: Erste Klaue
- 8: Innenfläche
- 9: Kompensationselement
- 10: Zweiter Lagerzapfen
- 11: Zweite Klaue
- 12: Funktionsfläche
- 13: Mitnehmer
- 14: Steuerkurve
- 15: Drehmoment
- 100: Erste Drehachse
- 101: Öffnungsrichtung
- 102: Zweite Drehachse

## Patentansprüche

1. Verriegelungsvorrichtung (1), insbesondere für einen Fahrzeugsitz, aufweisend einen Haltebereich (5) zur Aufnahme eines Gegenelements (6) und einer Klinke (3), welche zwischen einer Verriegelungsstellung zur Verriegelung des Gegenelements (6) im Haltebereich (5) und einer Entriegelungsstellung verschwenkbar ist, wobei die Verriegelungsvorrichtung (1) ferner ein Kompensationselement (9) aufweist, welches zwischen einer Kontaktstellung zum Spannen des Gegenelements (6) in Richtung des Haltebereichs (5) und einer Freigabestellung zum Freigeben des Gegenelements (3) verschwenkbar ist, wobei die Klinke (3) mittels einer ersten Feder in Richtung der Verriegelungsstellung federelastisch vorgespannt ist und wobei das Kompensationselement (9) mittels einer zweiten Feder von der Freigabestellung in Richtung der Kontaktstellung federelastisch vorgespannt ist, wobei ein Kopplungsmechanismus zwischen der Klinke (3) und dem Kompensationselement (9) derart ausgebildet ist, dass eine Bewegung der Klinke (3) von der Verriegelungsstellung in die Entriegelungsstellung eine Überführung des Kompensationselement (9) von der Kontaktstellung in die Freigabestellung bewirkt, wobei der Kopplungsmechanismus einen am Kompensationselement (9) ausgebildeten Mitnehmer (13) umfasst, welcher mit einer an der Klinke (3) ausgebildeten Steuerkurve (14) zusammenwirkt,
**dadurch gekennzeichnet, dass** eine erste Drehachse (100) des Kompensationselements (9) gegenüber einer zweiten Drehachse (102) der Klinke (3) versetzt angeordnet ist, wobei die erste und die zweite Drehachse (100, 102) parallel zueinander ausgerichtet sind.

2. Verriegelungsvorrichtung nach Anspruch 1, wobei Kompensationselement (9) eine in der Kontaktstellung dem Gegenelement (6) zugewandte Funktionsfläche (8) aufweist, welche in der Kontaktstellung eine in den Haltebereich (5) hinein gerichtete Kraft auf das Gegenelement (6) ausübt.

3. Verriegelungsvorrichtung nach Anspruch 2, wobei die Funktionsfläche (8) länger als eine in der Verriegelungsstellung dem Gegenelement (6) zugewandte weitere Funktionsfläche der Klinke (3) ausgebildet ist.

4. Verriegelungsvorrichtung (1) nach einem der Ansprüche 2 oder 3, wobei die Funktionsfläche (8) konkav ausgebildet ist.

5. Verriegelungsvorrichtung (1) nach einem der Ansprüche 2 bis 4, wobei die Verriegelungsvorrichtung (1) derart ausgebildet ist, dass das Gegenelement (6) nur beim Vorliegen einer insbesondere unfallbedingten Bewegung des Gegenelements (6) entlang einer aus dem Haltebereich (5) herausführenden Löserichtung in Kontakt mit der weiteren Funktionsfläche gelangt, wobei die weitere Funktionsfläche insbesondere senkrecht zur Löserichtung ausgebildet ist.

6. Verriegelungsvorrichtung (1) nach einem der Ansprüche 2 bis 5, wobei in der Kontaktstellung die Funktionsfläche (8) des Kompensationselement (9) in mechanischem Kontakt mit dem Gegenelement (6) ist und in der Verriegelungsstellung die weitere Funktionsfläche der Klinke (3) von dem Gegenelement (6) beabstandet ist.

7. Verriegelungsvorrichtung (1) nach einem der vorhergehenden Ansprüche, wobei eine erste Schwenkbewegung der Klinke (3) von der Verriegelungsstellung in Richtung der Entriegelungsstellung im Wesentlichen parallel zu einer weiteren ersten Schwenkbewegung des Kompensationselement (9) von der Kontaktstellung in Richtung der Freigabestellung ausgerichtet ist und wobei eine zweite Schwenkbewegung der Klinke (3) von der Entriegelungsstellung in Richtung der Verriegelungsstellung im Wesentlichen parallel zu einer weiteren zweiten Schwenkbewegung des Kompensationselement (9) von der Freigabestellung in Richtung der Kontaktstellung ausgerichtet ist.

8. Verriegelungsvorrichtung (1) nach einem der vorhergehenden Ansprüche, wobei ein Arbeitswinkel der Klinke (3) kleiner als ein Arbeitswinkel des Kompensationselements (9) ist.

9. Verriegelungsvorrichtung (1) nach einem der vorhergehenden Ansprüche, wobei die Klinke (3) eine einseitig, offene erste Klaue (7) zum teilweise Umgreifen des Gegenelements (6) in der Verriegelungsstellung umfasst und wobei das Kompensationselement (9) eine einseitig, offene zweite Klaue (11) zum teilweise Umgreifen des Gegenelements (6) in der Kontaktstellung umfasst.

10. Fahrzeugsitz aufweisend eine Verriegelungsvorrichtung (1) nach einem der vorhergehenden Ansprüche, insbesondere zur Befestigung des Fahrzeugsitzes an einem Fahrzeugboden.

## Claims

1. Locking device (1), in particular for a vehicle seat, having a holding region (5) for receiving a mating element (6) and a pawl (3) which is pivotable between a locking position for locking the mating element (6) in the holding region (5) and an unlocking position, wherein the locking device (1) furthermore has a compensation element (9) which is pivotable between a contact position for clamping the mating element (6) in the direction of the holding region (5) and a release position for releasing the mating element (3), wherein the pawl (3) is prestressed in a spring-elastic manner in the direction of the locking position by means of a first spring, and wherein the compensation element (9) is prestressed in a spring-elastic manner from the release position in the direction of the contact position by means of a second spring, wherein a coupling mechanism between the pawl (3) and the compensation element (9) is designed in such a manner that a movement of the pawl (3) from the locking position into the unlocking position brings about a transfer of the compensation element (9) from the contact position into the release position, wherein the coupling mechanism comprises a driver (13) which is formed on the compensation element (9) and interacts with a radial cam (14) formed on the pawl (3), **characterized in that** a first axis of rotation (100) of the compensation element (9) is arranged offset in relation to a second axis of rotation (102) of the pawl (3), wherein the first and the second axis of rotation (100, 102) are oriented parallel to each other.

2. Locking device according to Claim 1, wherein compensation element (9) has a functional surface (8) which, in the contact position, faces the mating element (6) and which, in the contact position, exerts a force, which is directed into the holding region (5), on the mating element (6).

3. Locking device according to Claim 2, wherein the functional surface (8) is designed to be longer than a further functional surface of the pawl (3), which further functional surface faces the mating element (6) in the locking position.

4. Locking device (1) according to either of Claims 2 and 3, wherein the functional surface (8) is of concave design.

5. Locking device (1) according to one of Claims 2 to 4, wherein the locking device (1) is designed in such a manner that the mating element (6) enters into contact with the further functional surface only in the presence of an in particular accident-induced movement of the mating element (6) along a release direction leading out of the holding region (5), wherein the further functional surface is formed in particular perpendicularly to the release direction.

6. Locking device (1) according to one of Claims 2 to 5, wherein, in the contact position, the functional surface (8) of the compensation element (9) is in mechanical contact with the mating element (6), and, in the locking position, the further functional surface of the pawl (3) is spaced apart from the mating element (6).

7. Locking device (1) according to one of the preceding claims, wherein a first pivoting movement of the pawl (3) from the locking position in the direction of the unlocking position is oriented substantially parallel to a further first pivoting movement of the compensation element (9) from the contact position in the direction of the release position, and wherein a second pivoting movement of the pawl (3) from the unlocking position in the direction of the locking position is oriented substantially parallel to a further second pivoting movement of the compensation element (9) from the release position in the direction of the contact position.

8. Locking device (1) according to one of the preceding claims, wherein a working angle of the pawl (3) is smaller than a working angle of the compensation element (9).

9. Locking device (1) according to one of the preceding claims, wherein the pawl (3) comprises a first claw (7), which is open on one side, for partially engaging around the mating element (6) in the locking position, and wherein the compensation element (9) comprises a second claw (11), which is open on one side, for partially engaging around the mating element (6) in the contact position.

10. Vehicle seat having a locking device (1) according to one of the preceding claims, in particular for fastening the vehicle seat to a vehicle floor.

## Revendications

1. Dispositif de verrouillage (1), en particulier pour un siège de véhicule, présentant une région de fixation (5) pour recevoir un élément conjugué (6) et un cliquet (3) qui peut pivoter entre une position de verrouillage pour verrouiller l'élément conjugué (6) dans la région de fixation (5) et une position de déverrouillage, le dispositif de verrouillage (1) présentant en outre un élément de compensation (9) qui peut pivoter entre une position de contact pour serrer l'élément conjugué (6) dans la direction de la région de fixation (5) et une position de libération pour libérer l'élément conjugué (3), le cliquet (3) étant précontraint élastiquement par ressort au moyen d'un premier ressort dans la direction de la position de verrouillage et l'élément de compensation (9) étant précontraint élastiquement par ressort au moyen d'un deuxième ressort de la position de libération dans la direction de la position de contact, un mécanisme d'accouplement entre le cliquet (3) et l'élément de compensation (9) étant réalisé de telle sorte qu'un déplacement du cliquet (3) de la position de verrouillage dans la position de déverrouillage provoque un transfert de l'élément de compensation (9) de la position de contact dans la position de libération, le mécanisme d'accouplement comprenant un dispositif d'entraînement (13) réalisé au niveau de l'élément de compensation (9), qui coopère avec une came de commande (14) réalisée au niveau du cliquet (3),
**caractérisé en ce qu'**un premier axe de rotation (100) de l'élément de compensation (9) est disposé de manière décalée par rapport à un deuxième axe de rotation (102) du cliquet (3), le premier et le deuxième axe de rotation (100, 102) étant orientés parallèlement l'un à l'autre.

2. Dispositif de verrouillage selon la revendication 1, dans lequel l'élément de compensation (9) présente une surface fonctionnelle (8) tournée dans la position de contact vers l'élément conjugué (6), laquelle exerce dans la position de contact une force orientée vers la région de fixation (5) sur l'élément conjugué (6).

3. Dispositif de verrouillage selon la revendication 2, dans lequel la surface fonctionnelle (8) est plus longue qu'une surface fonctionnelle supplémentaire du cliquet (3) tournée dans la position de verrouillage vers l'élément conjugué (6) .

4. Dispositif de verrouillage (1) selon l'une quelconque des revendications 2 ou 3, dans lequel la surface fonctionnelle (8) est réalisée sous forme concave.

5. Dispositif de verrouillage (1) selon l'une quelconque des revendications 2 à 4, dans lequel le dispositif de verrouillage (1) est réalisé de telle sorte que l'élément conjugué (6) parvienne en contact avec la surface fonctionnelle supplémentaire seulement dans le cas d'un déplacement de l'élément conjugué (6) provoqué notamment par un accident, le long d'une direction de libération le guidant hors de la région de fixation (5), la surface fonctionnelle supplémentaire étant notamment réalisée perpendiculairement à la direction de libération.

6. Dispositif de verrouillage (1) selon l'une quelconque des revendications 2 à 5, dans lequel, dans la position de contact, la surface fonctionnelle (8) de l'élément de compensation (9) est en contact mécanique avec l'élément conjugué (6) et, dans la position de verrouillage, la surface fonctionnelle supplémentaire du cliquet (3) est espacée de l'élément conjugué (6).

7. Dispositif de verrouillage (1) selon l'une quelconque des revendications précédentes, dans lequel un premier mouvement de pivotement du cliquet (3) de la position de verrouillage dans la direction de la position de déverrouillage est orienté essentiellement parallèlement à un premier mouvement de pivotement supplémentaire de l'élément de compensation (9) de la position de contact dans la direction de la position de libération et un deuxième mouvement de pivotement du cliquet (3) de la position de déverrouillage dans la direction de la position de verrouillage est orienté essentiellement parallèlement à un deuxième mouvement de pivotement supplémentaire de l'élément de compensation (9) de la position de libération dans la direction de la position de contact.

8. Dispositif de verrouillage (1) selon l'une quelconque des revendications précédentes, dans lequel un angle de travail du cliquet (3) est inférieur à un angle travail de l'élément de compensation (9).

9. Dispositif de verrouillage (1) selon l'une quelconque des revendications précédentes, dans lequel le cliquet (3) comprend une première griffe ouverte d'un côté (7) pour venir en prise en partie autour de l'élément conjugué (6) dans la position de verrouillage et l'élément de compensation (9) comprend une deuxième griffe ouverte d'un côté (11) pour venir en prise en partie autour de l'élément conjugué (6) dans la position de contact.

10. Siège de véhicule présentant un dispositif de verrouillage (1) selon l'une quelconque des revendications précédentes, en particulier pour la fixation du siège de véhicule à un plancher de véhicule.
